# EUROPEAN PATENT APPLICATION

(11) **EP 3 913 331 A1**
(43) Date of publication of application: **24.11.2021**
(21) Application number: 21150202.6
(22) Date of filing: 05.01.2021
(51) Int. Cl.: G01C 21/36, G06F 16/29

(54) **METHOD AND APPARATUS FOR BUILDING INTERSECTION MODEL, DEVICE AND MEDIUM**

(30) Priority: 18.05.2020 CN 202010420751
(71) Applicant: BAIDU ONLINE NETWORK TECHNOLOGY (BEIJING) CO., LTD., Beijing 100085 (CN)
(72) Inventor: LIN, Jinzhu, Beijing, 100085 (CN)
(74) Representative: Maiwald Patent- und Rechtsanwaltsgesellschaft mbH

(57) **Abstract**

The present disclosure provides a method and an apparatus for building an intersection model, an electronic device and a medium. The method includes: identifying a plurality of intersection nodes each having a multiway intersection node attribute based on road network data of an electronic map; grouping the plurality of intersection nodes based on a neighboring relation between the intersection nodes to obtain a plurality of intersection node groups corresponding to multiway intersections; and building an intersection model based on intra-group intersection nodes in each of the intersection node groups, links associated with at least two intra-group nodes in each of the intersection node groups, and links associated with intra-group intersection nodes in each of the intersection node groups and extended to outside of the multiway intersection corresponding to the intersection node group. The disclosure improves the efficiency and comprehensiveness of building the intersection model of the multiway intersections.

## Description

### TECHNICAL FIELD

The present disclosure generally relates to a technical field of data processing, and more particular to electronic map technologies.

### BACKGROUND

Generally, when using map applications for navigation, traffic lights and turning conditions at each intersection are broadcasted. In order to ensure accuracy of broadcasted result, an intersection model corresponding to the intersection is stored in an electronic map.

Due to various types of multiway intersections, efficiency of building intersection models for different types of intersections is low, and certain types of intersections may be missed. Meanwhile, when classifying the intersections, classification errors are easily caused due to similar types, resulting in errors in the final intersection model.

Therefore, how to achieve efficient and comprehensive establishment of the intersection models of different types of multiway intersections in a road network is a technical problem to be solved urgently.

### SUMMARY

Embodiments of the disclosure provide a method and an apparatus for building an intersection model, an electronic device and a medium, to improve construction efficiency and comprehensiveness of intersection models of multiway intersections.

In a first aspect, embodiments of the disclosure provide a method for building an intersection model. The method includes: identifying a plurality of intersection nodes each having a multiway intersection node attribute based on road network data of an electronic map; grouping the plurality of intersection nodes based on a neighboring relation between the intersection nodes to obtain a plurality of intersection node groups, in which each intersection node group is corresponding to a multiway intersection; building an intersection model based on intra-group intersection nodes in each of the intersection node groups, links associated with at least two intra-group nodes in each of the intersection node groups, and links associated with intra-group intersection nodes in each of the intersection node groups and extended to outside of the multiway intersection corresponding to the intersection node group.

In a second aspect, embodiments of the disclosure provide an apparatus for building an intersection model. The apparatus includes: an intersection node identifying module, an intersection node grouping module and an intersection model building module.

The intersection node identifying module is configured to identify a plurality of intersection nodes each having a multiway intersection node attribute based on road network data of an electronic map.

The intersection node grouping module is configured to group the plurality of intersection nodes based on a neighboring relation between the intersection nodes to obtain a plurality of intersection node groups, in which each intersection node group is corresponding to a multiway intersection.

The intersection model building module is configured to build an intersection model based on intra-group intersection nodes in each of the intersection node groups, links associated with at least two intra-group nodes in each of the intersection node groups, and links associated with intra-group intersection nodes in each of the intersection node groups and extended to outside of the multiway intersection corresponding to the intersection node group.

In a third aspect, embodiments of the disclosure provide an electronic device. The electronic device includes: at least one processor, and a memory communicatively connected to the at least one processor. The memory stores instructions executable by the at least one processor, and when the instructions are executed by the at least one processor, the at least one processor is caused to implement the method according to embodiments of the first aspect of the disclosure.

In a fourth aspect, embodiments of the disclosure provide a non-transitory computer-readable storage medium storing computer instructions. When the instructions are executed, the computer is caused to implement the method according to embodiments of the first aspect of the disclosure.

In a fifth aspect, embodiments of the disclosure provide a computer program containing program instructions. When the computer program executed on a processor, causing the processor to execute the method according to embodiments of the first aspect of the disclosure.

According to the technical solution of the disclosure, the plurality of intersection nodes each having the multiway intersection node attribute are determined based on road network data of the electronic map. The plurality of intersection nodes are grouped based on the neighboring relation between the intersection nodes to obtain the plurality of intersection node groups, and each intersection node group is corresponding to the multiway intersection. The intersection model is constructed based on the intra-group intersection nodes in each of the intersection node groups, the links associated with the at least two intra-group intersection nodes in each of the intersection node groups, and the links associated with the intra-group intersection nodes in each of the intersection node groups and the related nodes external to the intersection node group. Thus, building the intersection model of the multiway intersection is realized, and the efficiency and comprehensiveness of building the intersection model of the multiway intersection are improved.

It should be understood that the content described in this section is not intended to identify the key or important features of the embodiments of the disclosure, nor is it intended to limit the scope of the disclosure. Additional features of the disclosure will be easily understood by the following description.

### BRIEF DESCRIPTION OF THE DRAWINGS

The drawings are used to better understand the solution and do not constitute a limitation to the disclosure, in which:
FIG. 1 is a flowchart of a method for building an intersection model according to an embodiment of the disclosure.
FIG. 2 is a flowchart of another method for building an intersection model according to an embodiment of the disclosure.
FIG. 3 is a flowchart of yet another method for building an intersection model according to an embodiment of the disclosure.
FIG. 4A is a flowchart of a method for building an intersection model according to an embodiment of the disclosure.
FIG. 4B is a schematic diagram of a connection line between an intersection node and a terminal of a traffic light according to an embodiment of the disclosure.
FIG. 4C is a schematic diagram of each intra-group intersection node corresponding to a multiway intersection and links associated with the intra-group intersection nodes according to an embodiment of the disclosure.
FIG. 4D is a schematic diagram of integrating results of traffic lights corresponding to a multiway intersection according to an embodiment of the disclosure.
FIG. 4E is a schematic diagram of a multiway intersection according to an embodiment of the disclosure.
FIG. 5 is a structural diagram of an apparatus for building an intersection model according to an embodiment of the disclosure.
FIG. 6 is a block diagram of an electronic device used to implement the method for building an intersection model according to an embodiment of the disclosure.

### DETAILED DESCRIPTION

The following describes the exemplary embodiments of the present disclosure with reference to the accompanying drawings, which includes various details of the embodiments of the present disclosure to facilitate understanding, which shall be considered merely exemplary. Therefore, those of ordinary skill in the art should recognize that various changes and modifications can be made to the embodiments described herein without departing from the scope and spirit of the present disclosure. For clarity and conciseness, descriptions of well-known functions and structures are omitted in the following description.

The embodiments of the disclosure provide a method and an apparatus for building an intersection model, which are applicable for building an intersection model of a multiway intersection in an electronic map. The method for building an intersection model is executed by an apparatus for building an intersection model, which is implemented by software and/or hardware, and is specifically configured in an electronic device.

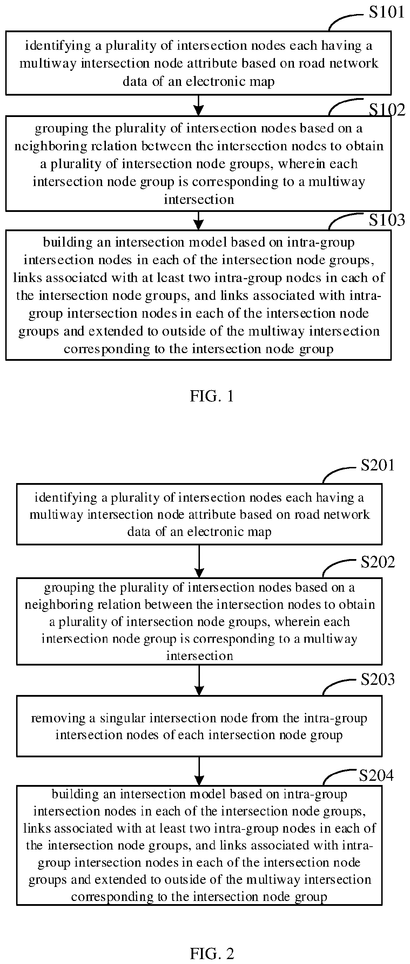

FIG. 1 is a flowchart of a method for building an intersection model according to an embodiment of the disclosure. The method includes the following blocks.

At block S101, a plurality of intersection nodes each having a multiway intersection node attribute are identified based on road network data of an electronic map.

A multiway intersection is a complex element including the plurality of intersection nodes within the composite intersection. When expressed in abstraction, the plurality of intersection nodes are generated due to double-line expression of certain roads, and these associated intersection nodes are integrated into a complex multiway intersection, which is used to conveniently express intersection information. The multiway intersection is a virtual element defined to establish a topological relation.

The node is understood as a connection point between two links from a plurality of links generated by performing abstraction on the roads when the roads have bifurcations or when attributes between roads change. Attribute change information is stored in association with the node.

The link is understood as a line (e.g. a curve) formed by performing abstraction on roads in real life. Attribute information of these roads is stored in association with the corresponding link.

Road network data is understood as data that stores related content such as nodes, links, node attributes and link attributes in the electronic map.

The intersection nodes are understood as nodes corresponding to the intersection of at least two links in the electronic map.

The multiway intersection node attribute includes a traffic light rule attribute, which characterizes traffic rules for traffic lights that the multiway intersection follows. The multiway intersection node attribute may also include a multiway intersection attribute, which are used to define the number of the links associated with the intersection nodes to distinguish the multiway intersection from a normal intersection.

In an implementation, the identifying a plurality of intersection nodes each having a multiway intersection node attribute based on road network data of an electronic map, includes: determining intersection nodes each having a traffic light rule attribute based on the road network data of the electronic map to obtain a plurality of candidate intersection nodes; and determining at least one candidate intersection node as the intersection node based on the number of links associated with each candidate intersection node.

The determining the at least one candidate intersection node as the intersection node based on the number of the links associated with each candidate intersection node includes: determining a candidate intersection node associated with at least three links as the intersection node.

The intersection nodes determined based on the above two-stage determining method include the intersection nodes of the multiway intersection, thereby reducing interferences caused by a large number of nodes of non-multiway intersections on the construction of the intersection model of the multiway intersection. Meanwhile, with the mode of identifying the intersection nodes, a basis for subsequent identification of the multiway intersections is laid, and identification for an intersection type of the multiway intersection may not be performed, which relieves dependence on the intersection type for identification of the multiway intersections. Occurrences of errors or omissions in building the intersection model due to type identification errors could be avoided, and commonality and universality of the identification of the multiway intersections are improved.

At block S 102, the plurality of intersection nodes are grouped based on a neighboring relation between the intersection nodes to obtain a plurality of intersection node groups, and each intersection node group is corresponding to a multiway intersection.

The grouping the plurality of intersection nodes based on a neighboring relation between the intersection nodes may be grouping each intersection node and neighboring intersection nodes of the intersection node into the intersection node group based on the neighboring relation between intersection nodes.

In an implementation, grouping intersection nodes having the neighboring relation into the same group to obtain the plurality of intersection node groups through graph traversal. For example, each intersection node and neighboring intersection nodes having the neighboring relation are grouped into the same group to obtain the intersection node groups through graph traversal. Each intersection node group has a corresponding multiway intersection, so as to realize the identification of the multiway intersection nodes corresponding to each multiway intersection.

In detail, the intersection node and the neighboring intersection nodes having the neighboring relation with the intersection node are grouped into the same group to obtain the intersection node group.

The graph traversal method may be a depth-first search traversal method or a breadth-first search traversal method. For example, the intersection nodes and the neighboring intersection nodes are grouped by the depth-first search traversal method, so as to improve search efficiency.

Intersection nodes in the multiway intersection have the neighboring relation to each other. Therefore, each intersection node and the neighboring intersection nodes of the intersection node are grouped according to the neighboring relation, so as to obtain the intersection node group corresponding to each multiway intersection, thus synchronous identification of the multiway intersection is realized, and identification efficiency of the multiway intersections is improved. With the introduction of the neighboring intersection nodes of the intersection nodes when grouping, remaining intersection nodes not having the multiway intersection node attribute in the multiway intersection may be avoided, and a basic for identification accuracy of the multiway intersection nodes is laid.

At block S 103, an intersection model is built based on intra-group intersection nodes in each of the intersection node groups, links associated with at least two intra-group nodes in each of the intersection node groups, and links associated with intra-group intersection nodes in each of the intersection node groups and extended to outside of the multiway intersection corresponding to the intersection node group.

The links associated with intra-group intersection nodes in each of the intersection node groups and extended to outside of the multiway intersection corresponding to the intersection node group may be links associated with intra-group intersection nodes in each of the intersection node groups and other nods external to the intersection node group.

For example, the intersection model is built based on the intra-group intersection nodes in each of the intersection node groups, the links associated with at least two intra-group intersection nodes in each of the intersection node groups, and the links associated with the intra-group intersection node in each of the intersection node groups and extended to outside of the multiway intersection corresponding to the intersection node group. The intersection model includes intersection node data, intersection inner line data and intersection passing line data, and is configured to describe the multiway intersection, so as to provide a navigation basis for route navigation.

The intersection node data is used to describe composition of the intersection nodes of the multiway intersection. The intersection inner line data is used to describe the inner lines of the multiway intersection. The intersection passing line data is used to describe entry links and exiting links of the multiway intersection.

The intersection node data is generated based on the intra-group intersection nodes in each of the intersection node groups. The intersection inner line data is generated based on the links associated with the at least two intra-group intersection nodes in each of the intersection node groups. The intersection passing line data is generated based on the links associated with each intra-group intersection node in each of the intersection node groups and extended to outside of the multiway intersection corresponding to the intersection node group.

The links associated with each intra-group intersection node in each of the intersection node groups and extended to outside of the multiway intersection corresponding to the intersection node group may be a link extended from an entered direction corresponding to the intra-group intersection node to the intra-group intersection node, and/or a link extended from the intra-group intersection node to an exited direction corresponding to the intra-group intersection node.

The link associated with an intra-group intersection node and an another the intra-group intersection node, which is the intersection inner line, corresponds to an internal road of the multiway intersection. The link associated with the intra-group node and extended to outside of the multiway intersection corresponding to the intersection node group, for example a link associated with the intra-group node and a node external to the intersection node group, which is the intersection passing line, corresponds to the entry road or exiting road of the multiway intersection. For each multiway intersection, links passed through the intra-group intersection nodes include an intersection inner line and an intersection passing line, and the intersection passing line corresponding to the intra-group node may be an intersection non-inner line or an intersection exterior line.

In order to facilitate the identification of the multiway intersection in the electronic map, optionally, after the intersection model is built, at least one intra-group intersection node in the intersection model is used as an intersection identifier of the multiway intersection to represent the multiway intersection. In order to improve representativeness of the determined multiway intersection identifier, optionally, a main node of a multiway intersection is determined by determining at least one intra-group intersection node having the traffic light rule attribute in the intersection node group, and the main node of the multiway intersection is as the intersection identifier of the multiway intersection.

According to the embodiments of the disclosure, the plurality of intersection nodes each having the multiway intersection node attribute are determined based on road network data of the electronic map. Each intersection node and neighboring intersection nodes of the intersection node are grouped into the intersection node group corresponding to the multiway intersection based on the neighboring relation between the intersection nodes. The intersection model is built based on the intra-group intersection nodes in each of the intersection node groups, the links associated with at least two intra-group intersection nodes in each of the intersection node groups, and the links associated with each intra-group intersection node in each of the intersection node groups extended to outside of the multiway intersection corresponding to the intersection node group. The above technical solution introduces the multiway intersection node attribute to identify the intersection nodes of the multiway intersections, and the intersection nodes and the neighboring intersection nodes of the intersection nodes are grouped based on the neighboring relation between the intersection nodes, so as to identify the multiway intersections without classifying the multiway intersections in advance, to relieve dependence on intersection type identification when identifying the multiway intersections, so that occurrence of errors or omissions in building the intersection model due to the type identification errors could be avoided, the commonality and universality of the identification of the multiway intersections are improved, and batch processing of the multiway intersection identification is realized. The efficiency and comprehensiveness of building the intersection model of the multiway intersections are further improved.

FIG. 2 is a flowchart of another method for building an intersection model according to an embodiment of the disclosure. The process of "removing a singular intersection node from the intra-group intersection nodes of each intersection node group" is added after "grouping each intersection node and neighboring intersection nodes of the intersection node into an intersection node group corresponding to a multiway intersection based on a neighboring relation between intersection nodes".

As illustrated in FIG. 2, the method for building an intersection model includes the following blocks.

At block S201, a plurality of intersection nodes each having a multiway intersection node attribute are identified based on road network data of an electronic map.

At block S202, the plurality of intersection nodes are grouped based on a neighboring relation between the intersection nodes to obtain a plurality of intersection node groups, wherein each intersection node group is corresponding to a multiway intersection.

At block S203, a singular intersection node is removed from the intra-group intersection nodes of each intersection node group.

When the intersection node and the neighboring nodes are grouped according to the neighboring relation between intersection nodes, nodes that do not belong to the multiway intersection may be mistakenly added to the intersection node group corresponding to the multiway intersection, which affects the accuracy of the intersection model building result. Therefore, the singular intersection node is removed.

In an implementation, removing the singular intersection node from the intra-group intersection nodes of each intersection node group includes: determining distances between the intra-group intersection nodes in each intersection node group; and removing an intra-group intersection node with distance from other intra-group intersection node being greater than or equal to a preset intersection distance from each intersection node group. The preset intersection distance can be set by those skilled in the art according to requirements or empirical values, or determined through a large number of repeatedly experiments. For example, the preset intersection distance may be 30 meters.

By introducing the preset intersection distance, the intra-group intersection node whose distance to other intra-group node is greater than or equal to the preset intersection distance is removed, so that the situation of multi-intersection bridging in the intra-group intersection nodes in each intersection node group is avoided, and a guarantee for the accuracy of the subsequently building intersection model is provided.

The intra-group intersection nodes in the intersection node group may also be special traffic nodes, such as, roundabout compose nodes or roundabout adjacent nodes. Generally, in the navigation process, a corresponding navigation broadcast mode is adopted for the special traffic node. In order to avoid the intersection model of the multiway intersections from affecting the navigation broadcast of such special traffic nodes, such singular intersection node is removed.

In an implementation, removing the singular intersection node from the intra-group intersection nodes of each intersection node group includes: removing intra-group intersection nodes belonging to preset traffic nodes from each intersection node group based on node attribute descriptions. The preset traffic nodes are traffic nodes with a preset broadcast rule in the navigation broadcast, such as, roundabout compose nodes or roundabout adjacent nodes.

Removing the intra-group intersection node of the intersection node group that is the preset traffic node, the influence of the intersection model of the multiway intersection on the broadcast of the preset traffic nodes during the navigation process is avoided, thereby avoiding performing traffic light broadcast and/or turning broadcast of the preset traffic nodes repeatedly in the navigation process.

At block S204, an intersection model is built based on intra-group intersection nodes in each of the intersection node groups, links associated with at least two intra-group nodes in each of the intersection node groups, and links associated with intra-group intersection nodes in each of the intersection node groups and extended to outside of the multiway intersection corresponding to the intersection node group.

In the embodiments of the disclosure, after obtaining the intersection node groups corresponding to the multiway intersections, the singular intersection node in the intra-group nodes in each of the intersection node groups is removed, thereby improving accuracy of the nodes composition of the identified multiway intersections, and avoiding the multi-intersection bridging situation of the nodes. In addition, singular intersection node elimination can also be used to avoid the influence of the intersection model of the multiway intersection on the special traffic nodes, which provides a guarantee for the user's broadcast experience during navigation.

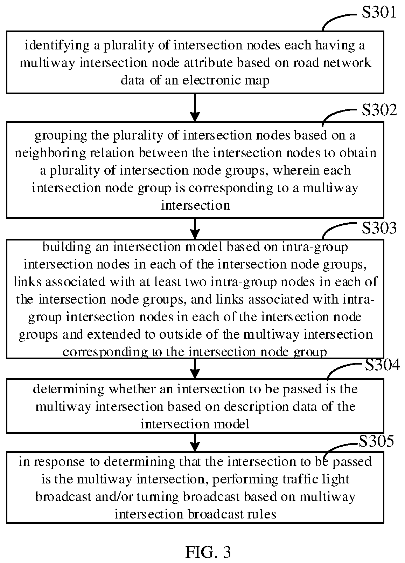

FIG. 3 is a flowchart of yet another method for building an intersection model according to an embodiment of the disclosure.

After building the intersection model, "determining whether an intersection to be passed is the multiway intersection based on description data of the intersection model; and in response to determining that the intersection to be passed is the multiway intersection, performing traffic light broadcast and/or turning broadcast based on multiway intersection broadcast rules" is added into the process.

As illustrated in FIG. 3, the method for building an intersection model includes the following steps.

At block S301, a plurality of intersection nodes each having a multiway intersection node attribute are identified based on road network data of an electronic map.

At block S302, the plurality of intersection nodes are grouped based on a neighboring relation between the intersection nodes to obtain a plurality of intersection node groups, wherein each intersection node group is corresponding to a multiway intersection.

At block S303, an intersection model is built based on intra-group intersection nodes in each of the intersection node groups, links associated with at least two intra-group nodes in each of the intersection node groups, and links associated with intra-group intersection nodes in each of the intersection node groups and extended to outside of the multiway intersection corresponding to the intersection node group.

For example, intersection node data is generated based on the intra-group intersection nodes in each of the intersection node groups. The intersection inner line data is generated based on the links associated with the at least two intra-group intersection nodes in each of the intersection node groups. The intersection passing line data is generated based on the intersection non-inner lines coupled to each intra-group intersection node in each of the intersection node groups. The intersection model including the intersection node data, the intersection inner line data, and the intersection passing line data is generated.

At block S304, whether an intersection to be passed is the multiway intersection is determined based on description data of the intersection model.

In an implementation, whether the intersection to be passed is the multiway intersection is determined based on at least one of the intersection node data, the intersection inner line data and the intersection passing line data.

For example, the intersection to be passed is the multiway intersection in response to determining that the intersection to be passed meets at least one of the following conditions, such as, intersection nodes of the intersection to be passed belong to the intra-group intersection nodes in the intersection node data, entry links of the intersection to be passed belong to the link data in the intersection passing line data, and links between the intersection nodes in the intersection to be passed belong to the link data in the intersection inner line data.

In an another implementation, by obtaining the intersection nodes of the intersection to be passed, and determining whether the intersection nodes of the intersection to be passed have a main nod of the multiway intersection, the intersection to be passed is a multiway intersection in response to determining that the intersection nodes of the intersection to be passed have the main nod of the multiway intersection.

At block S305, in response to determining that the intersection to be passed is the multiway intersection, traffic light broadcast and/or turning broadcast is performed based on multiway intersection broadcast rules.

In an implementation, performing the traffic light broadcast and/or turning broadcast based on the multiway intersection broadcast rules includes: determining a traffic light to be passed in a driving direction of a vehicle, and obtaining a traffic light rule attribute corresponding to the traffic light to be passed from traffic light rule attributes associated with the intersection to be passed for broadcasting.

When the intersection to be passed is the multiway intersection, the intersection to be passed may have at least two associated traffic lights, and correspondingly, have at least two associated traffic light rule attributes. In order to avoid broadcasting at least two traffic light rule attributes when passing the intersection to be passed under the situation of having at least two traffic lights arranged on the intersection to be passed, only one traffic light broadcast is performed at the intersection to be passed according to the multiway intersection broadcast rules, and only one statistics is performed when determining the number of traffic lights.

In order to avoid searching for the associated traffic lights of the intersection to be passed from a large number of traffic light rule attributes when each time obtaining the traffic light rule attributes of a multiway intersection, the traffic light rule attributes of the intra-group intersection nodes in each of the intersection node groups are bound, before building the intersection model.

In an implementation, performing the turning broadcast based on the multiway intersection broadcast rules includes: stopping a straight-going broadcast when the vehicle is turning at the intersection to be passed, and performing only the turning broadcast. Therefore, a trouble for user driving caused due to multiple broadcasts at the same multiway intersection is avoided.

In the embodiments of the disclosure, after the intersection model is built, the description data of the intersection model is added to determine whether the intersection to be passed is the multiway intersection. The traffic light broadcast and/or turning broadcast are performed according to the multiway intersection broadcast rule in response to determining that the intersection to be passed is the multiway intersection. Thus, the trouble when the user driving through the multiway intersection caused due to repeated broadcasts of the traffic lights or the repeated broadcasts of different driving directions at the same multiway intersection is avoided, thereby enhancing the user experience.

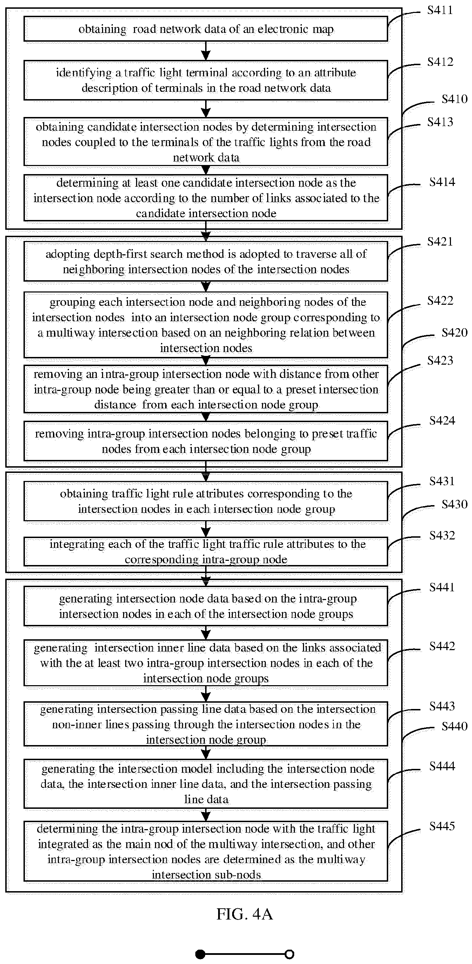

FIG. 4A is a flowchart of a method for building an intersection model according to an embodiment of the disclosure.

As illustrated in FIG. 4A, the method for building an intersection model includes the following blocks.

At block S410, an intersection node identification stage is executed.

At block S420, an intersection node grouping stage is executed.

At block S430, a traffic light integrating stage is executed.

At block S440, a multiway intersection building stage is executed.

The intersection node identification stage includes the following blocks.

At block S411, road network data of an electronic map is obtained.

At block S412, a traffic light terminal is identified according to an attribute description of terminals in the road network data.

At block S413, candidate intersection nodes are obtained by determining intersection nodes coupled to the terminals of the traffic lights from the road network data.

At block S414, at least one candidate intersection node is determined as the intersection node according to the number of links associated to the candidate intersection node.

The intersection nodes that can be filtered out by the above method meeting the following conditions: the intersection node is coupled to the terminal of the traffic light, that is, one terminal of a connection link is the terminal of the traffic light, and the other terminal is the intersection node; and the intersection point is coupled to at least three links.

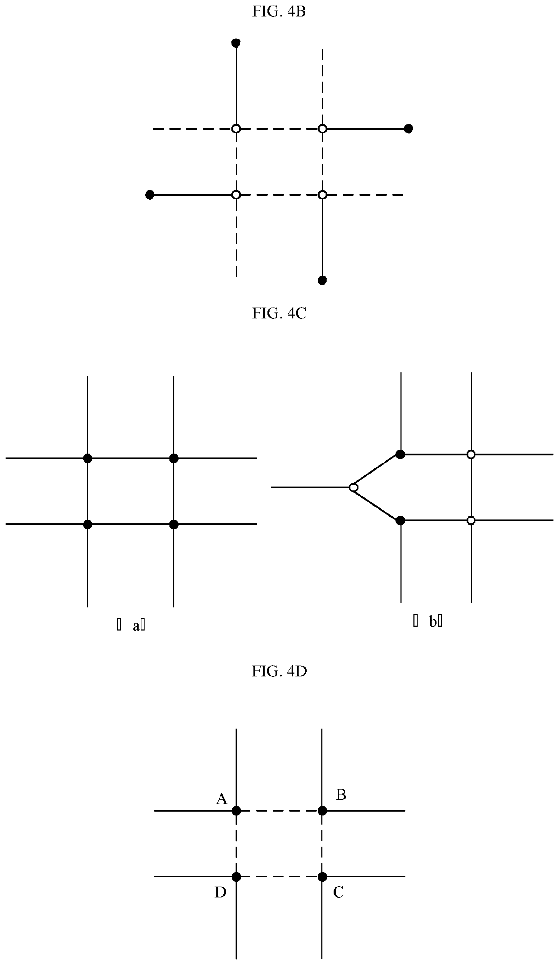

Referring to the schematic diagram of the connection line between the intersection node and the terminal of the traffic light shown in FIG. 4B, a solid circle represents the terminal of the traffic light, a hollow circle represents the intersection node, and a solid connection line represents the connection link between the traffic light and the intersection node.

The intersection node grouping stage includes the following blocks.

At block S421, depth-first search method is adopted to traverse all of neighboring intersection nodes of the intersection nodes.

At block S422, each intersection node and neighboring nodes of the intersection nodes are grouped into an intersection node group corresponding to a multiway intersection based on a neighboring relation between intersection nodes.

At block S423, an intra-group intersection node with distance from other intra-group node being greater than or equal to a preset intersection distance is removed from each intersection node group.

The preset intersection distance is 30 meters.

At block S423, intra-group intersection nodes belonging to preset traffic nodes are removed from each intersection node group.

The preset traffic nodes are roundabout compose nodes and/or roundabout adjacent nodes.

FIG. 4C is a schematic diagram of each intra-group intersection nodes corresponding to a multiway intersection and links associated with the intra-group intersection nodes according to an embodiment of the disclosure. The solid circle represents the terminal of the traffic light, the hollow circle represents the intra-group intersection node, the solid connecting line represents the connection link between the traffic light and the intersection node, and a dashed connecting line represents other links.

The traffic light integrating stage includes the following blocks.

At block S431, traffic light rule attributes corresponding to the intersection nodes in each intersection node group are obtained.

At block S432, each of the traffic light traffic rule attributes is integrated to the corresponding intra-group node.

The intra-group intersection nodes include some neighboring intersection nodes, and therefore, at least some intersection nodes in the intra-group intersection nodes have the traffic light rule attributes.

FIG. 4D is a schematic diagram of a traffic light integrating result of a multiway intersection according to an embodiment of the disclosure. A solid circle represents the intra-group intersection node where a traffic light is integrated. A hollow circle represents an intra-group intersection node where a traffic light is not integrated. A solid connecting line represents a link associated with a multiway intersection. Referring to diagram (a) in FIG. 4D, the two terminals of some links are intra-group intersection nodes integrated with traffic lights. Referring to diagram (b) in FIG. 4D, one terminal of each of some links is an intra-group node with traffic lights integrated and the other terminal of each of some links is an intra-group intersection node without traffic light integrated.

By integrating the traffic light rule attributes to the intra-group intersection nodes in the intersection node group, one multiway intersection, even if has a plurality of traffic lights, performing only one traffic light broadcast may be ensured in the navigation broadcast, and only one statistics is performed when the number of traffic light is counted.

The multiway intersection building stage includes the following blocks.

At block S441, intersection node data is generated based on the intra-group intersection nodes in each of the intersection node groups.

At block S442, intersection inner line data is generated based on the links associated with the at least two intra-group intersection nodes in each of the intersection node groups.

At block S443, intersection passing line data is generated based on the intersection non-inner lines passing through the intersection nodes in the intersection node group.

Blocks S441 to S443 may be executed simultaneously or sequentially, and the specific execution order of S441 to S443 is not limited in the embodiment of the disclosure.

At block S444, the intersection model including the intersection node data, the intersection inner line data, and the intersection passing line data is generated.

By generating the intersection model, only the turning broadcast is performed, and the straight-going broadcast is stopped when turning at a multiway intersection.

At block S445, the intra-group intersection node with the traffic light integrated is determined as the main nod of the multiway intersection, and other intra-group intersection nodes are determined as the multiway intersection sub-nods.

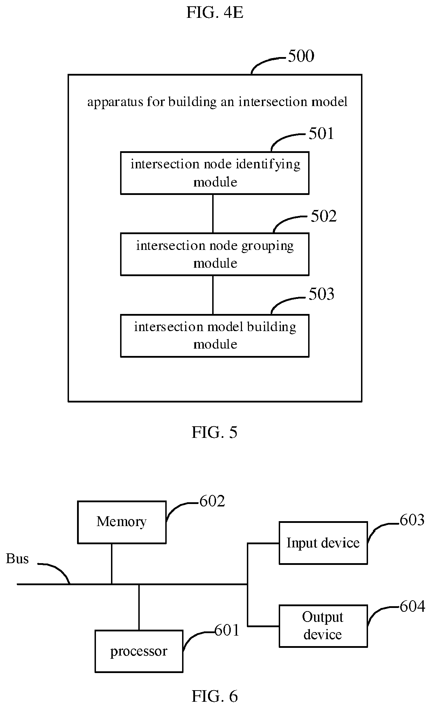

FIG. 4E is a schematic diagram of a multiway intersection according to an embodiment of the disclosure. The solid circles represent the intra-group node with the traffic lights integrated, the dashed connecting lines represent the intersection inner lines in the intersection inner line data. The solid connecting lines represent the intersection passing lines in the intersection passing line data. Point A is the main nod of the multiway intersection, and nods B, C and D are the multiway intersection sub-nods.

FIG. 5 is a structural diagram of an apparatus for building an intersection model according to an embodiment of the disclosure. The apparatus for building an intersection model 500 includes: an intersection node identifying module 501, an intersection node dividing module 502 and an intersection model building module 503.

The intersection node identifying module 501 is configured to identify a plurality of intersection nodes each having a multiway intersection node attribute based on road network data of an electronic map.

The intersection node dividing module 502 is configured to group the plurality of intersection nodes based on a neighboring relation between the intersection nodes to obtain a plurality of intersection node groups, and each intersection node group is corresponding to a multiway intersection.

The intersection model building module 503 is configured to build an intersection model based on intra-group intersection nodes in each of the intersection node groups, links associated with at least two intra-group nodes in each of the intersection node groups, and links associated with intra-group intersection nodes in each of the intersection node groups and extended to outside of the multiway intersection corresponding to the intersection node group.

According to the embodiments of the disclosure, the intersection node identifying module 501 is configured to identify a plurality of intersection nodes each having a multiway intersection node attribute based on road network data of an electronic map. The intersection node dividing module 502 is configured to group the plurality of intersection nodes based on a neighboring relation between the intersection nodes to obtain a plurality of intersection node groups, and each intersection node group is corresponding to a multiway intersection. The intersection model building module 503 is configured to build an intersection model based on intra-group intersection nodes in each of the intersection node groups, links associated with at least two intra-group nodes in each of the intersection node groups, and links associated with intra-group intersection nodes in each of the intersection node groups and extended to outside of the multiway intersection corresponding to the intersection node group. The above technical solution introduces the multiway intersection node attribute to identify the intersection nodes of the multiway intersections, and the intersection nodes and the neighboring intersection nodes of the intersection nodes are grouped based on the neighboring relation between the intersection nodes, so as to identify the multiway intersections without classifying the multiway intersections in advance, to relieve dependence on intersection type identification when identifying the multiway intersections, so that occurrence of errors or omissions in building the intersection model due to the type identification errors could be avoided, the commonality and universality of the identification of the multiway intersections are improved, and batch processing of the multiway intersection identification is realized. The efficiency and comprehensiveness of building the intersection model of the multiway intersections are further improved.

The intersection node identifying module includes: a candidate intersection node obtaining unit and an intersection node obtaining unit.

The candidate intersection node obtaining unit is configured to determine intersection nodes each having a traffic light rule attribute based on the road network data of the electronic map to obtain a plurality of candidate intersection nodes.

The intersection node obtaining unit is configured to determine at least one candidate intersection node as the intersection node based on the number of links associated with each candidate intersection node.

The apparatus further includes a singular intersection node removing module. The singular intersection node removing module is configured to remove a singular intersection node from the intra-group intersection nodes of each intersection node group, after grouping the plurality of intersection nodes based on the neighboring relation between the intersection nodes to obtain the plurality of intersection node groups.

The singular intersection node removing module includes: a distance determining unit and a first removing unit. The distance determining unit is configured to determine distances between the intra-group intersection nodes in each intersection node group. The first removing unit is configured to remove an intra-group intersection node with distance from other intra-group node being greater than or equal to a preset intersection distance from each intersection node group.

The singular intersection node removing module includes: a second removing unit configured to remove intra-group intersection nodes belonging to preset traffic nodes from each intersection node group based on node attribute descriptions.

The intersection node grouping module includes: a graph traversal unit, configured to group intersection nodes having the neighboring relation into the same group to obtain the plurality of intersection node groups through graph traversal.

The intersection model building module includes: an intersection node data generating unit, an intersection inner line data generating unit, an intersection passing line data generating unit and an intersection model generating unit.

The intersection node data generating unit is configured to generate intersection node data based on the intra-group intersection nodes in each of the intersection node groups.

The intersection inner line data generating unit is configured to generate intersection inner line data based on the links associated with the at least two intersection nodes in each of the intersection node groups.

The intersection passing line data generating unit is configured to generate intersection passing line data based on the links associated with the intra-group intersection nodes in each of the intersection node groups and extended to outside of the multiway intersection corresponding to the intersection node group.

The intersection model generating unit is configured to generate the intersection model comprising the intersection node data, the intersection inner line data, and the intersection passing line data.

The apparatus further includes: a main node determining module, configured to determine a main node of the multiway intersection by determining at least one intra-group intersection node each having a traffic light rule attribute in the intersection node group, the main node of the multiway intersection being as an intersection identifier of the multiway intersection.

Moreover, the apparatus further includes: a multiway intersection determining module and a broadcasting module. The multiway intersection determining module is configured to determine whether an intersection to be passed is the multiway intersection based on description data of the intersection model. The broadcasting module is configured to, in response to determining that the intersection to be passed is the multiway intersection, perform traffic light broadcast and/or turning broadcast based on multiway intersection broadcast rules.

The broadcasting module includes: a traffic light broadcasting unit and a turning broadcasting unit. The traffic light broadcasting unit is configured to determine a traffic light to be passed in a driving direction of a vehicle, and obtain a traffic rule attribute corresponding to the traffic light to be passed from traffic light rule attributes associated with the intersection to be passed for broadcasting. The turning broadcasting unit is configured to stop a straight-going broadcast when the vehicle is turning at the intersection to be passed.

Furthermore, the apparatus further includes: a traffic light binding module, configured to bind traffic light rule attributes of the intra-group nodes in each of the intersection node groups before building the intersection model based on intra-group nodes in each of the intersection node groups, links associated with at least two intra-group nodes in each of the intersection node groups, and links associated with each intra-group node in each of the intersection node groups and nodes external to each of the intersection node groups.

The above-mentioned apparatus for building an intersection model could execute any method for building an intersection model of this disclosure, and has functional modules and beneficial effects for executing the method for building the intersection model.

According to the embodiments of the present disclosure, the present disclosure also provides an electronic device, a readable storage medium and a computer program.

FIG. 6 is a block diagram of an electronic device used to implement a method for building an intersection model according to an embodiment of the disclosure. Electronic devices are intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 6, the electronic device includes: one or more processors 601, a memory 602, and interfaces for connecting various components, including a high-speed interface and a low-speed interface. The various components are interconnected using different buses and can be mounted on a common mainboard or otherwise installed as required. The processor may process instructions executed within the electronic device, including instructions stored in or on the memory to display graphical information of the GUI on an external input/output device such as a display device coupled to the interface. In other embodiments, a plurality of processors and/or buses can be used with a plurality of memories and processors, if desired. Similarly, a plurality of electronic devices can be connected, each providing some of the necessary operations (for example, as a server array, a group of blade servers, or a multiprocessor system). A processor 601 is taken as an example in FIG. 6.

The memory 602 is a non-transitory computer-readable storage medium according to the disclosure. The memory stores instructions executable by at least one processor, so that the at least one processor executes the method for building an intersection model according to the present disclosure. The non-transitory computer-readable storage medium of the present disclosure stores computer instructions, which are used to cause a computer to execute the method for building an intersection model according to the present disclosure.

As a non-transitory computer-readable storage medium, the memory 602 is configured to store non-transitory software programs, non-transitory computer executable programs and modules, such as program instructions/modules corresponding to the method for building an intersection model in the embodiment of the present disclosure (For example, the intersection node identifying module 501, the intersection node dividing module 502, the intersection model building module 503 shown in FIG. 5). The processor 601 executes various functional applications and data processing of the server by running non-transitory software programs, instructions, and modules stored in the memory 602, that is, implementing the method for building an intersection model in the foregoing method embodiments.

The memory 602 may include a storage program area and a storage data area, where the storage program area may store an operating system and application programs required for at least one function. The storage data area may store data created according to the use of the electronic device for implementing the method for building an intersection model. In addition, the memory 602 may include a high-speed random access memory, and a non-transitory memory, such as at least one magnetic disk storage device, a flash memory device, or other non-transitory solid-state storage device. In some embodiments, the memory 602 may optionally include a memory remotely disposed with respect to the processor 601, and these remote memories may be connected to the electronic device for implementing the method for building an intersection model through a network. Examples of the above network include, but are not limited to, the Internet, an intranet, a local area network, a mobile communication network, and combinations thereof.

The electronic device for implementing the method for building an intersection model may further include: an input device 603 and an output device 604. The processor 601, the memory 602, the input device 603, and the output device 604 may be connected through a bus or in other manners. In FIG. 6, the connection through the bus is taken as an example.

The input device 903 may receive inputted numeric or character information, and generate key signal inputs related to user settings and function control of an electronic device for implementing the method for building an intersection model, such as a touch screen, a keypad, a mouse, a trackpad, a touchpad, an indication rod, one or more mouse buttons, trackballs, joysticks and other input devices. The output device 604 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, application specific integrated circuits (ASICs), computer hardware, firmware, software, and/or combinations thereof. These various embodiments may be implemented in one or more computer programs, which may be executed and/or interpreted on a programmable system including at least one programmable processor. The programmable processor may be dedicated or general purpose programmable processor that receives data and instructions from a storage system, at least one input device, and at least one output device, and transmits the data and instructions to the storage system, the at least one input device, and the at least one output device.

These computing programs (also known as programs, software, software applications, or code) include machine instructions of a programmable processor and may utilize high-level processes and/or object-oriented programming languages, and/or assembly/machine languages to implement these calculation procedures. As used herein, the terms "machine-readable medium" and "computer-readable medium" refer to any computer program product, device, and/or device used to provide machine instructions and/or data to a programmable processor (for example, magnetic disks, optical disks, memories, programmable logic devices (PLDs), including machine-readable media that receive machine instructions as machine-readable signals. The term "machine-readable signal" refers to any signal used to provide machine instructions and/or data to a programmable processor. The computer program contains program instructions, when the computer program is executed on a processor, causing the processor to execute the method in the foregoing method embodiment.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, sound input, or tactile input).

The systems and technologies described herein can be implemented in a computing system that includes background components (for example, a data server), or a computing system that includes middleware components (for example, an application server), or a computing system that includes front-end components (For example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other.

According to the embodiments of the disclosure, the plurality of intersection nodes each having the multiway intersection node attribute are determined based on road network data of the electronic map. Each intersection node and neighboring intersection nodes of the intersection node are grouped into the intersection node group corresponding to the multiway intersection based on the neighboring relation between the intersection nodes. The intersection model is built based on the intra-group intersection nodes in each of the intersection node groups, the links associated with at least two intra-group intersection nodes in each of the intersection node groups, and the links associated with each intra-group intersection node in each of the intersection node groups extended to outside of the multiway intersection corresponding to the intersection node group. The above technical solution introduces the multiway intersection node attribute to identify the intersection nodes of the multiway intersections, and the intersection nodes and the neighboring intersection nodes of the intersection nodes are grouped based on the neighboring relation between the intersection nodes, so as to identify the multiway intersections without classifying the multiway intersections in advance, to relieve dependence on intersection type identification when identifying the multiway intersections, so that occurrence of errors or omissions in building the intersection model due to the type identification errors could be avoided, the commonality and universality of the identification of the multiway intersections are improved, and batch processing of the multiway intersection identification is realized. The efficiency and comprehensiveness of building the intersection model of the multiway intersections are further improved.

It should be understood that various forms of processes shown above may be used to reorder, add, or delete steps. For example, the steps described in the present disclosure may be performed in parallel, sequentially, or in different orders. As long as the desired results of the technical solutions disclosed in the present disclosure can be achieved, no limitation is made herein.

The above specific embodiments do not constitute a limitation on the protection scope of the present disclosure. Those skilled in the art should understand that various modifications, combinations, sub-combinations and substitutions can be made according to design requirements and other factors. Any modification, equivalent replacement and improvement made within the spirit and principle of this application shall be included in the protection scope of this application.

## Claims

1. A method for building an intersection model, comprising:
identifying a plurality of intersection nodes each having a multiway intersection node attribute based on road network data of an electronic map;
grouping the plurality of intersection nodes based on a neighboring relation between the intersection nodes to obtain a plurality of intersection node groups, wherein each intersection node group is corresponding to a multiway intersection; and
building an intersection model based on intra-group intersection nodes in each of the intersection node groups, links associated with at least two intra-group nodes in each of the intersection node groups, and links associated with intra-group intersection nodes in each of the intersection node groups and extended to outside of the multiway intersection corresponding to the intersection node group.

2. The method according to claim 1, wherein the identifying the plurality of intersection nodes each having the multiway intersection node attribute based on the road network data of the electronic map, comprises:
determining intersection nodes each having a traffic light rule attribute based on the road network data of the electronic map to obtain a plurality of candidate intersection nodes; and
determining at least one candidate intersection node as the intersection node based on the number of links associated with each candidate intersection node.

3. The method according to claim 1 or 2, after grouping the plurality of intersection nodes based on the neighboring relation between the intersection nodes to obtain the plurality of intersection node groups, further comprising:
removing a singular intersection node from the intra-group intersection nodes of each intersection node group.

4. The method according to claim 3, wherein the removing the singular intersection node from the intra-group intersection nodes of each intersection node group comprises:
determining distances between the intra-group intersection nodes in each intersection node group; and
removing an intra-group intersection node with distance from other intra-group intersection node being greater than or equal to a preset intersection distance from each intersection node group.

5. The method according to claim 3, wherein the removing the singular intersection node from the intra-group intersection nodes of each intersection node group comprises:
removing intra-group intersection nodes belonging to preset traffic nodes from each intersection node group based on node attribute descriptions.

6. The method according to any one of claims 1 to 5, wherein grouping the plurality of intersection nodes based on the neighboring relation between the intersection nodes to obtain the plurality of intersection node groups, comprises:
grouping intersection nodes having the neighboring relation into the same group to obtain the plurality of intersection node groups through graph traversal.

7. The method according to any one of claims 1 to 6, wherein building an intersection model based on intra-group intersection nodes in each of the intersection node groups, links associated with at least two intra-group nodes in each of the intersection node groups, and links associated with intra-group intersection nodes in each of the intersection node groups and extended to outside of the multiway intersection corresponding to the intersection node group comprises:
generating intersection node data based on the intra-group intersection nodes in each of the intersection node groups;
generating intersection inner line data based on the links associated with the at least two intra-group intersection nodes in each of the intersection node groups;
generating intersection passing line data based on the links associated with the intra-group intersection nodes in each of the intersection node groups and extended to outside of the multiway intersection corresponding to the intersection node group; and
generating the intersection model comprising the intersection node data, the intersection inner line data, and the intersection passing line data.

8. The method according to claim 7, further comprising:
determining a main node of the multiway intersection by determining at least one intra-group intersection node each having a traffic light rule attribute in the intersection node group, the main node of the multiway intersection being as an intersection identifier of the multiway intersection.

9. The method according to any one of claims 1-8, further comprising:
determining whether an intersection to be passed is the multiway intersection based on description data of the intersection model; and
in response to determining that the intersection to be passed is the multiway intersection, performing traffic light broadcast and/or turning broadcast based on multiway intersection broadcast rules.

10. The method according to claim 9, wherein the performing the traffic light broadcast and/or turning broadcast based on the multiway intersection broadcast rules comprises:
determining a traffic light to be passed in a driving direction of a vehicle, and obtaining a traffic light rule attribute corresponding to the traffic light to be passed from traffic light rule attributes associated with the intersection to be passed for broadcasting; and/or,
stopping a straight-going broadcast when the vehicle is turning at the intersection to be passed.

11. An apparatus for building an intersection model, comprising:
an intersection node identifying module, configured to identify a plurality of intersection nodes each having a multiway intersection node attribute based on road network data of an electronic map;
an intersection node grouping module, configured to group the plurality of intersection nodes based on a neighboring relation between the intersection nodes to obtain a plurality of intersection node groups, wherein each intersection node group is corresponding to a multiway intersection; and
an intersection model building module, configured to build an intersection model based on intra-group intersection nodes in each of the intersection node groups, links associated with at least two intra-group nodes in each of the intersection node groups, and links associated with intra-group intersection nodes in each of the intersection node groups and extended to outside of the multiway intersection corresponding to the intersection node group.

12. The apparatus according to claim 11, wherein the intersection node identifying module comprises:
a candidate intersection node obtaining unit, configured to determine intersection nodes each having a traffic light rule attribute based on the road network data of the electronic map to obtain a plurality of candidate intersection nodes; and
an intersection node obtaining unit, configured to determine at least one candidate intersection node as the intersection node based on the number of links associated with each candidate intersection node.

13. An electronic device, comprising:
at least one processor; and
a memory connected in communication with the at least one processor; wherein,
the memory stores instructions executable by the at least one processor, when the instructions are executed by the at least one processor, the at least one processor is caused to implement the method according to any one of claims 1-10.

14. A non-transitory computer-readable storage medium storing computer instructions,
wherein when the computer instructions are executed, the computer is caused to implement the method according to any one of claims 1-10.

15. A computer program containing program instructions, when executed on a processor, causing the processor to execute the method according to any one of claims 1-10.
